# EUROPÄISCHE PATENTSCHRIFT

(11) **EP 3 173 633 B1**
(45) Veröffentlichungstag und Bekanntmachung des Hinweises auf die Patenterteilung: **17.04.2019**
(21) Anmeldenummer: 15196199.2
(22) Anmeldetag: 25.11.2015
(51) Int. Cl.: F16B 13/12

(54) **SPREIZDÜBEL**
EXPANSION ANCHOR
CHEVILLE A EXPANSION

(43) Veröffentlichungstag der Anmeldung: 31.05.2017
(73) Patentinhaber: HILTI Aktiengesellschaft, 9494 Schaan (LI)
(72) Erfinder: Rosenkranz, Falk, 9658 Wildhaus (CH); Brunhuber, Thomas, 6811 Göfis (AT); Boeckle, Juergen, 9494 Schaan (LI); Martin, Simon, 6811 Goefis (AT)
(74) Vertreter: Hilti Aktiengesellschaft Corporate Intellectual Property

(56) Entgegenhaltungen:
- EP-A1- 0 543 723
- EP-A2- 2 314 888
- DE-A1- 3 622 937
- DE-A1- 3 733 854
- FR-A- 1 465 309

## Beschreibung

Die Erfindung betrifft einen Spreizdübel, insbesondere aus Kunststoff, gemäss dem Oberbegriff des Anspruchs 1. Ein solcher Spreizdübel ist ausgestattet mit einem Schaft, der einen Halsbereich und einen Spreizbereich aufweist, wobei der Spreizbereich axial versetzt zum Halsbereich angeordnet ist, und einem Spreizkanal, der den Halsbereich und den Spreizbereich des Schafts, insbesondere axial, durchläuft, wobei der Schaft im Spreizbereich durch Einführen eines Spreizelements in den Spreizkanal zum Verankern des Spreizübels in einem Bohrloch radial aufweitbar ist, wobei der Spreizkanal im Spreizbereich, insbesondere ausschliesslich, durch Einstiche gebildet ist, die vom Schaftumfang ausgehen und in das Schaftinnere führen, und wobei der Spreizdübel zumindest ein Verschlussmittel zum zumindest bereichsweisen Verschliessen zumindest eines Teils der Einstiche aufweist.

Die EP 2881599 A1 betrifft einen Spreizdübel aus Kunststoff mit einem Spreizbereich zur Verankerung an einer Bohrlochwand, wobei der Schaft des Dübels im Spreizbereich eine Vielzahl von Einstichen aufweist, welche durch Dorne geformt werden, die an zwei gegenüberliegenden Formhälften angeordnet sind. Die Einstriche sind dabei so relativ zueinander angeordnet, dass sie auch den im Inneren des Spreizbereichs längs des Schafts verlaufenden Spreizkanal bilden. Daher kann der Spreizbereich der EP 2881599 A1 ohne innenliegende Kernnadel geformt werden.

Weitere Spreizdübel, bei denen der Spreizkanal durch senkrecht zur Dübellängsachse verlaufende Einstiche gebildet wird, sind aus der DE 3248141 A1, der DE 3241158 A1 und der EP 2924302 A1 bekannt. Gemäss der EP2924302 A1 ist vorgesehen, dass der Schaft im Halsbereich einen Schlitz aufweist. Damit kann nun nicht nur der Spreizbereich, sondern auch der Halsbereich ausschliesslich durch zwei Formhälften gefertigt werden, ohne dass eine zusätzliche Kernnadel erforderlich ist.

Die DE 19910214 A1, die DE 19753388 A1 und die DE 4015327 A1 zeigen Spreizdübel, bei deren Fertigung zunächst zwei Halbschalen geformt werden. Die Halbschalen werden sodann um einen Scharnierbereich herum gegeneinander verschwenkt, wobei der Spreizbereich gebildet wird. Die DE 10357367 A1 zeigt einen Dämmstoffdübel mit einem Spreizbereich, der zwei Spreizzungen aufweist.

Die nächstkommende DE 36 22 937 A1 betrifft einen Spreizdübel, dessen Dübelkörper von einer Abdeckhülse umgeben ist.

Aufgabe der Erfindung ist es, einen gattungsgemässen Spreizdübel so weiterzubilden, dass er bei besonders geringem Herstellungsaufwand und guten Lastwerten eine besonders hohe Zuverlässigkeit aufweist und besonders gut setzbar ist.

Die Aufgabe wird erfindungsgemäss durch einen Kunststoff-Spreizdübel mit den Merkmalen des Anspruchs 1 gelöst. Bevorzugte Ausführungsformen sind in den abhängigen Ansprüchen angegeben.

Ein erfindungsgemässer Spreizdübel ist dadurch gekennzeichnet, dass als Verschlussmittel Rastelemente vorgesehen sind, welche den Spreizbereich in einem komprimierten Zustand halten können.

Die Erfindung basiert auf der Beobachtung, dass es bei Spreizdübeln, bei denen - um eine kernnadellose Fertigung zu ermöglichen - der Spreizkanal im Spreizbereich durch von aussen ausgehende Einstiche gebildet ist, unter besonderen, ungünstigen Umständen zu einem erschwerten Setzvorgang des Spreizdübels und in der Folge sogar zu einer nicht für alle Anwendungen ausreichenden, insbesondere unvollständigen, Verankerung kommen kann. Die Erfindung hat nun erkannt, dass dies eine Folge der Konstruktion eines solchen Dübels sein kann. Denn da bei einem solchen Spreizdübel der Spreizkanal durch von der Schaftaussenseite ausgehende Einstiche gebildet ist, ist der Spreizkanal bei einem solchen Spreizdübel konstruktionsbedingt vergleichsweise gut von aussen zugänglich. Die Erfindung hat weiter erkannt, dass diese konstruktionsbedingte Besonderheit einen Durchtritt von Partikeln von der Schaftaussenseite in den Spreizkanal begünstigen kann, und dass dies wiederum der Grund für die teilweise beobachtete unvollständige Verankerung sein kann. Denn beim Einschieben des Spreizdübels in ein Bohrloch ist der Spreizdübel häufig Partikeln ausgesetzt, die beim Bohren des Bohrlochs entstanden sind. Treten diese Partikel nun durch die Einstiche hindurch in den Spreizkanal und sammeln sich dort an, so kann dies unter Umständen dazu führen, dass das stiftartige Spreizelement nicht mehr vollständig in den Spreizkanal eingeführt werden kann, sondern zuvor auf den stirnseitig vor dem Spreizelement befindlichen Partikeln aufsitzt. Dieser Effekt kann dadurch verschärft sein, dass es bei kernnadellos gefertigten Spreizdübeln anspruchsvoll sein, stirnseitige Ausstossöffnungen für die Partikel aus dem Spreizkanal vorzusehen. Hier setzt die Erfindung an und sieht vor, mittels zumindest eines besonderen Verschlussmittels zumindest einen Teil der Einstiche zumindest bereichsweise zumindest temporär zu verschliessen. Hierdurch kann einem Eintritt von Partikeln in den Spreizkanal beim Einschieben des Spreizdübels in das Bohrloch wirksam entgegengewirkt werden, so dass das Setzen des Spreizdübels besonders zuverlässig erfolgen kann und somit besonders gute Lastwerte erzielt werden können.

Besonders wirkungsvoll kann die Erfindung bei solchen Spreizdübeln sein, welche als Dämmstoffdübel zum Festlegen einer Dämmstoffplatte an einer Wand ausgebildet sind. Denn beim Anbringen solcher Dämmstoffdübel wird häufig ein Loch durch die zu befestigende Dämmstoffplatte hindurch in die Wand gebohrt. Hierbei wurde beobachtet, dass die beim Bohren der Wand anfallenden Partikel häufig von dem benachbarten Dämmstoff in der Umgebung des Lochs zurückgehalten werden und beim anschliessenden Einführen des Dübels in das Loch vom Dübel abgerieben werden. Da also beim Anbringen von Dämmstoffdübeln häufig mit einer besonders grossen Partikelmenge am Bohrloch zu rechnen ist, der erfindungsgemässe Spreizdübel aber für solche Einsatzbedingungen besonders gut geeignet ist, ist es besonders vorteilhaft, dass der Spreizdübel ein Dämmstoffdübel ist. Insbesondere kann ein Dämmstoffdübel einen am Schaft angeordneten Halteteller zum Sichern einer Dämmstoffplatte am Schaft aufweisen. Der Spreizdübel kann aber beispielsweise auch ein Rahmendübel sein.

Beim Aufspreizen des Spreizbereichs mittels des Spreizelements kann das Verschlussmittel den zumindest einen von ihm verschlossenen Einstich wieder freigeben, muss dies aber nicht.

Die Einstiche bilden vorzugsweise jeweils den Abdruck eines Dorns, der vom Schaftumfang aus in den Schaft eingedrückt worden ist und anschliessend wieder herausgezogen worden ist, oder/und es verläuft zumindest ein Teil der Einstiche, welche den Spreizkanal im Spreizbereich bilden, senkrecht zur Längsachse des Schafts. Insbesondere können alle Einstiche, welche den Spreizkanal im Spreizbereich bilden, senkrecht zur Längsachse des Schafts verlaufen. In diesem Fall können die Einstiche in einem Spritzgussverfahren in besonders einfacher Weise hergestellt werden. Vorzugsweise weisen die Einstiche keine Hinterschneidungen aus, so dass ein besonders einfaches Entformen der Dorne möglich ist. Besonders bevorzugt ist es, dass der Spreizkanal im Spreizbereich ausschliesslich durch Einstiche gebildet ist, die vom Schaftumfang ausgehen und in das Schaftinnere führen, was die Herstellung noch weiter vereinfachen kann.

Soweit von "radial", "axial", "diametral" und/oder "Umfangsrichtung" die Rede ist, kann sich dies, insbesondere sofern nicht anders erläutert, auf die Längsachse des Schafts beziehen. Die Längsachse des Schafts verläuft vorzugsweise parallel, insbesondere koaxial, zum Spreizkanal und/oder durch den Spreizkanal hindurch. Die Querschnittsebene oder die Querschnittsebenen verläuft beziehungsweise verlaufen insbesondere senkrecht zur Längsachse des Schafts und/oder senkrecht zur Längserstreckung des Spreizkanals. Der Schaft besteht vorzugsweise aus einem Kunststoffmaterial. Spreizbereich und Halsbereich des Schafts sind vorzugsweise einstückig ausgebildet, was die Herstellung vereinfachen kann.

Geeigneterweise ist der Schaftumfang im Spreizbereich und/oder Halsbereich zumindest annähernd zylindrisch ausgebildet. Das Verankern des Dübels in einem Bohrloch durch radiales Aufweiten des Spreizbereichs kann insbesondere beinhalten, dass im Spreizbereich angeordnete Spreizelemente des Dübels vom Spreizelement radial an die, vorzugsweise zylindrische, Wand des Bohrlochs angepresst werden.

Das Spreizelement kann insbesondere stiftförmig ausgeführt sein. Es kann beispielsweise eine Schraube oder ein Nagel sein und beispielsweise aus einem Kunststoffmaterial, einem Metallmaterial oder einer Kombination hiervon bestehen. Das Spreizelement kann als Bestandteil des Dübels oder als separates Teil betrachtet werden.

Der Spreizkanal kann durchgängig ausgeführt sein. Er kann jedoch auch, beispielsweise fertigungsbedingt oder um den Einfluss von Partikeln auf das Spreizverhalten noch besser kontrollieren zu können, eine oder mehrere vom Spreizelement durchstossbare Membranen aufweisen.

Im Halsbereich kann der Schaft vorzugsweise eine zumindest annähernd geschlossene Hülse bilden, welche den Spreizkanal umgibt. Der Halsbereich wird durch Einführen des Spreizelements in den Spreizkanal zweckmässigerweise nicht oder allenfalls bereichsweise radial aufgeweitet. Zusätzlich zu dem beschriebenen Spreizbereich kann der Spreizdübel unter Umständen auch einen oder mehrere Zusatzspreizbereiche aufweisen, die ebenfalls durch Einführen des Spreizelements in den Spreizkanal zum Verankern des Dübels im Bohrloch radial aufweitbar sind, die aber geometrisch verschieden ausgestaltet sein können.

Es kann vorgesehen sein, dass der Spreizkanal in zumindest einer Querschnittsebene des Spreizbereichs durch zwei Einstiche gebildet wird, wodurch insbesondere ein Spreizdübel wie in der EP 2881599 A1 beschrieben erhalten werden kann. Hierdurch können im Querschnitt des Spreizbereichs zwei separate, segmentartige Spreizelemente gebildet werden, was ein in Umfangsrichtung besonders gleichmässiges Aufspreizen ermöglichen kann. Alternativ kann vorgesehen sein, dass der Spreizbereich in jeder Querschnittsebene durch einen einzigen Einstich gebildet wird, wodurch U-förmige Spreizelemente und vorzugsweise ein Spreizdübel wie in der DE 3241158 A1 beschrieben erhalten werden können. Auch Mischformen zwischen den beiden Alternativen sind möglich, bei denen in einem ersten Abschnitt des Spreizbereichs der Spreizkanal im Querschnitt durch zwei Einstiche gebildet wird, und in einem zweiten Abschnitt des Spreizbereichs der Spreizkanal im Querschnitt durch einen einzigen Einstich. Es ist zweckmässig, dass zumindest ein Teil der Einstiche längs des Schafts periodisch angeordnet ist. Beispielsweise können die Einstiche am Schaftumfang zwei Rechteckfunktionen bilden.

Soweit hier ein Merkmal im Zusammenhang mit nur einem Einstich beschrieben ist, kann dieses Merkmal auch für mehrere Einstiche oder für sämtliche Einstiche gelten. Erfindungsgemäss dient das zumindest eine Verschlussmittel zum Verschliessen zumindest eines Teils der Einstiche des Spreizbereichs, welche den Spreizkanal bilden, d.h. es müssen nicht notwendigerweise alle Einstiche des Spreizbereichs, welche den Spreizkanal bilden, von dem Verschlussmittel oder von den Verschlussmitteln verschlossen sein. Vorzugsweise können das eine Verschlussmittel oder die mehreren Verschlussmittel aber sämtliche Einstiche des Spreizbereichs, welche den Spreizkanal bilden, verschliessen.

Grundsätzlich könnte vorgesehen seien, dass das Verschlussmittel eine vom Schaft separate Abdeckung aufweist, welche den Spreizbereich zumindest teilweise bedeckt. Dies kann herstellungstechnisch besonders vorteilhaft sein, da die Abdeckung einfach im Anschluss an die Fertigung des Spreizbereichs auf den Spreizbereich aufgebracht werden kann, und zugleich kann eine solche Abdeckung einen Partikeldurchgang besonders wirkungsvoll verhindern. Da es sich bei der Abdeckung um ein vom Schaft separates Element handelt, kann zudem durch geeignete Wahl des Materials und/oder der Oberflächenbeschaffenheit der Abdeckung die Leistungsfähigkeit des Spreizdübels im Ganzen noch weiter gesteigert werden. Die Abdeckung liegt am Schaft an, und dies vorzugsweise unmittelbar.

Die Abdeckung kann insbesondere aus einer Folie bestehen. Es können mehrere separate Abdeckungen vorgesehen sein, die jeweils einen Teil der Einstiche bedecken. Es kann aber auch genau eine Abdeckung vorgesehen sein, was den Herstellungsaufwand weiter reduzieren kann.

Die Abdeckung kann beispielsweise stoffschlüssig mit dem Schaft verbunden sein, beispielsweise mit dem Schaft verklebt sein. Zusätzlich oder alternativ kann die Abdeckung auch formschlüssig und/oder kraftschlüssig mit dem Schaft verbunden sein, dies insbesondere wenn die Abdeckung ein Schlauch ist.

Besonders bevorzugt ist es, dass die Abdeckung ein Schlauch ist, der den Schaft im Spreizbereich umgibt. Demgemäss ist die Abdeckung also ein Ring, durch den der Schaft hindurch verläuft. Dies kann einerseits herstellungstechnisch vorteilhaft sein und kann darüber hinaus die Zuverlässigkeit noch weiter erhöhen, insbesondere weil eine besonders zuverlässige Verbindung zwischen Abdeckung und Schaft erhalten werden kann. Der Schlauch kann insbesondere ein Schrumpfschlauch sein.

Weiterhin ist es vorteilhaft, dass die Abdeckung Polyethylen aufweist. Dies kann insbesondere dann vorteilhaft sein, wenn die Abdeckung ein Schrumpfschlauch ist. Ein solcher Schrumpfschlauch kann aus vernetztem und gerecktem Polyethylen bestehen.

Alternativ oder zusätzlich kann vorgesehen sein, dass die Abdeckung Ethylenvinylacetat (EVA) aufweist. Ethylenvinylacetat kann bei guter Verfügbarkeit einen vergleichsweise hohen Reibungskoeffizienten aufweisen, was für eine besonders gute Verankerung des Spreizbereichs und somit für besonders gute Auszugslasten sorgen kann.

Alleinig oder zusätzlich zu einer Abdeckung sieht die Erfindung als Verschlussmittel Rastelemente vor, welche den Spreizbereich, insbesondere temporär, in einem komprimierten Zustand halten können. Der von den Rastelementen gebildete Rastmechanismus kann im Rahmen der Fertigung des Spreizdübels aktiviert werden, das heisst der Spreizdübel wird zusammengedrückt und in den komprimierten Zustand mit zumindest bereichsweise verschlossenen Einstichen überführt, in welchem keine oder vergleichsweise wenig Partikel in den Spreizbereich eindringen können. Vorzugsweise wird durch das Eintreiben des Spreizelements in den Spreizkanal während des Setzvorgangs auf der Baustelle der Rastmechanismus leicht gelöst, so dass der Spreizbereich ohne Einschränkungen aufgespreizt werden kann.

Zweckmässigerweise sind die Rastelemente einstückig mit dem Schaft im Spreizbereich gebildet. Dies kann die Herstellung noch weiter vereinfachen und die Zuverlässigkeit noch weiter erhöhen.

Eine besonders bevorzugte Weiterbildung der Erfindung besteht darin, dass die Rastelemente Schwalbenschwanzformen sind, welche an einen der Einstiche oder an mehrere der Einstiche angrenzen. Demgemäss kann der Rastmechanismus an den Einstichen gebildet sein. Dies kann im Hinblick auf den Herstellungsaufwand vorteilhaft sein, insbesondere da die Rastelemente durch geeignete Formgebung der zur Herstellung der Einstiche verwendeten Dorne zeitgleich mit der Herstellung der Einstiche hergestellt werden können. Die Schwalbenschwanzformen können insbesondere bei Blickrichtung von aussen auf den Spreizbereich mit Blickachse zum Spreizkanal und/oder mit Blickachse zur Längsachse des Schafts und/oder in einer Abwicklung des Schafts gegeben sein. Vorzugsweise grenzt zumindest eines der Rastelemente an drei der Einstiche an. Im Zusammenhang mit den Schwalbenschwanzformen können unter den Einstichen insbesondere diejenigen Einstiche verstanden werden, die im Spreizbereich angeordnet sind und die den Spreizkanal im Spreizbereich bilden.

Wie schon weiter oben erwähnt kann der Spreizdübel vorzugsweise ein Dämmstoffdübel zur Befestigung von Dämmstoffplatten an einer Wand sein. Insbesondere kann er daher einen am Schaft angeordneten Halteteller zum Sichern einer Dämmstoffplatte am Schaft aufweisen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer ersten Ausführungsform eines Dübels;
- Figur 2:: eine perspektivische Darstellung wie Figur 1 des Dübels aus Figur 1, wobei jedoch die in Figur 1 am Spreizbereich angeordnete Abdeckung entfernt ist;
- Figur 3:: die Abdeckung des Dübels aus Figur 1 in perspektivischer Ansicht;
- Figur 4:: eine teildurchscheinende Seitenansicht des Dübels aus Figur 1 ohne Abdeckung;
- Figur 5:: eine Querschnittsansicht des Dübels aus Figur 1 ohne Abdeckung an der Position A-A in Figur 4;
- Figur 6:: eine Querschnittsansicht des Dübels aus Figur 1 ohne Abdeckung an der Position B-B in Figur 4;
- Figur 7:: eine Querschnittsansicht des Dübels aus Figur 1 ohne Abdeckung an der Position G-G in Figur 4; und
- Figur 8:: eine Seitenansicht einer zweiten, erfindungsgemässen Ausführungsform eines Dübels.

Gleich wirkende Elemente sind in den Figuren mit denselben Bezugszeichen gekennzeichnet.

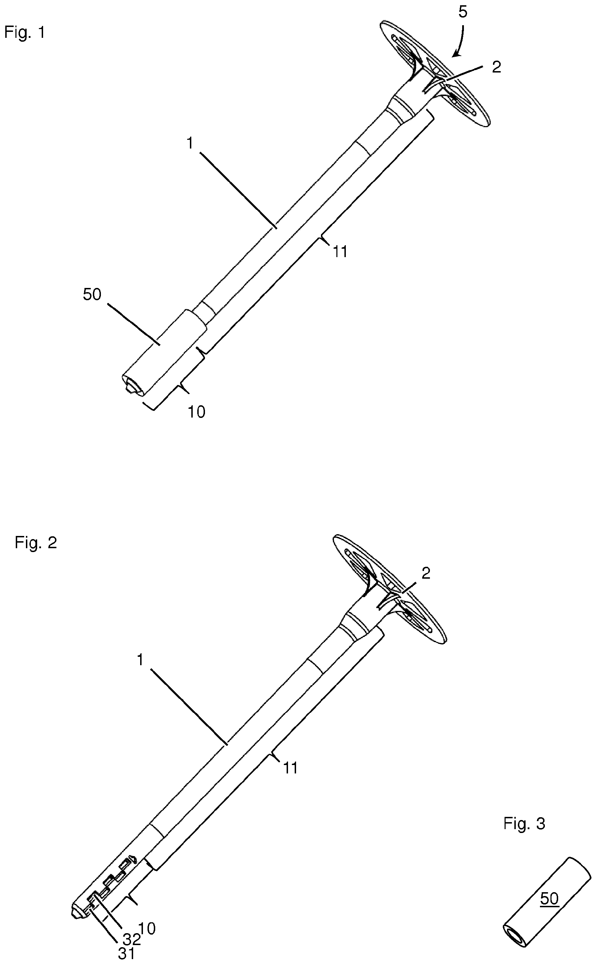

Die Figuren 1 bis 7 zeigen ein erstes Ausführungsbeispiel eines Spreizdübels. Der Spreizdübel ist als Dämmstoffdübel ausgebildet und weist als solcher einen Schaft 1 auf, an dessen rückwärtigen Ende ein Halteteller 2 zum Sichern einer Dämmstoffplatte am Schaft 1 angeordnet ist. In einer alternativen Ausgestaltung könnte der Spreizdübel auch als Rahmendübel ausgebildet sein, wobei in diesen Fall der Halteteller 2 fehlen kann.

Längs durch den Schaft 1 hindurch erstreckt sich im Schaftinneren ein Spreizkanal 5, welcher zum rückwärtigen Ende des Spreizdübels hin offen ist.

Der Schaft 1 weist im Anschluss an sein vorderes Ende einen Spreizbereich 10 auf. Dieser Spreizbereich 10 ist durch Einführen eines nicht dargestellten stiftartigen Spreizelements zum Verankern an einer Bohrlochwand radial aufweitbar. Zwischen Spreizbereich 10 und rückwärtigen Schaftende mit Halteteller 2 weist der Schaft 1 einen Halsbereich 11 auf, der allenfalls eingeschränkt zum Aufweiten durch das Spreizelement vorgesehen ist.

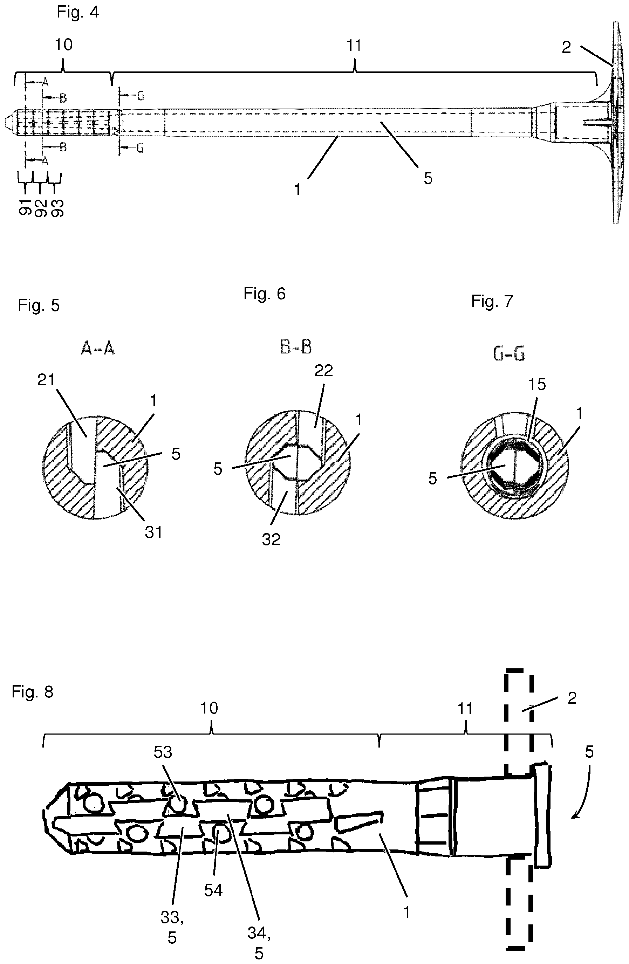

Wie insbesondere Figur 4 zeigt, weist der Spreizbereich 10 mehrere axial versetzte Spreizzonen auf, wobei beispielhaft drei benachbarte Spreizzonen mit den Bezugszeichen 91, 92 und 93 gekennzeichnet sind. In jeder der Spreizzonen 91, 92, 93 weist der Schaft 1 zwei gegenüberliegende Einstiche auf, die vom Schaftumfang ausgehen, von dort in das Schaftinnere führen und sich im Schaftinneren vorzugsweise treffen. Im Falle der Spreizzone 91 sind dies wie in Figur 3 gezeigt die Einstiche 21 und 31, und im Falle der Spreizzone 92 wie in Figur 4 gezeigt die Einstiche 22 und 32. Die Einstiche 21, 31, 22, 32 bilden im Spreizbereich 10 den Spreizkanal 5.

Wie insbesondere in Figur 2, aber auch in den Figuren 5 und 6 erkennbar ist, sind die Einstiche 31 und 32 benachbarter Spreizzonen 91 und 92 in Umfangsrichtung des Schafts 1 versetzt zueinander angeordnet. Gleiches gilt, wie in den Figuren 5 und 6 erkennbar, für die in Figur 2 verdeckten Einstiche 21 und 22. Die Einstiche 21, 22, usw. einerseits und die Einstiche 31, 32, usw. andererseits sind jeweils periodisch angeordnet und bilden zwei rechteckfunktionsförmige Bahnen, die sich längs des Schafts 1 erstrecken, und die zwei Spreizzungen voneinander abgrenzen.

Wie insbesondere in Figur 7 gezeigt ist, ist am Übergang zwischen Spreizbereich 10 und Halsbereich 11 im Spreizkanal 5 eine Einschnürung 15 angeordnet, welche den Spreizkanal 5 lokal verjüngt und beispielsweise zur Zentrierung des Spreizelements im Spreizkanal 5 dienen kann.

Im betriebsfertigen Zustand des Spreizdübels, der in Figur 1 gezeigt ist, weist dieser, als vom Schaft 1 separates Teil, eine schlauchförmige Abdeckung 50 aus einem Kunststoffmaterial auf, welche den Schaft 1 umgibt und im Spreizbereich 10 des Schafts 1 am Schaft 1 anliegt. Diese Abdeckung 50 verhindert ein Eindringen von Partikeln in die Einstiche 21, 22, 31, 32, usw.

Figur 8 zeigt ein weiteres, erfindungsgemässes Ausführungsbeispiel eines Spreizdübels, der in weiten Teilen analog dem Spreizdübel der Figuren 1 bis 7 konzipiert ist.

Der Spreizdübel der Figur 8 weist ebenfalls einen Schaft 1 auf. Der Spreizdübel der Figur 8 kann als Rahmendübel oder auch als Dämmstoffdübel ausgeführt sein, wobei bei einer Ausführung als Dämmstoffdübel am rückwärtigen Ende des Schafts 1 abermals ein Halteteller 2 zum Sichern einer Dämmstoffplatte am Schaft 1 angeordnet sein kann. Dieser Halteteller 2 ist in Figur 8 nur grob schematisch mit Strichlinien gezeigt.

Im Inneren des Schafts 1 der Ausführungsform der Figur 8 erstreckt sich ein Spreizkanal 5 durch den Schaft 1 hindurch, wobei der Spreizkanal 5 zum rückwärtigen Ende des Schafts 1 hin offen ist. Der Schaft 1 weist im Anschluss an sein vorderes Ende einen Spreizbereich 10 auf, welcher durch Einführen eines nicht dargestellten stiftartigen Spreizelements zum Verankern an einer Bohrlochwand radial aufweitbar ist, und zwischen Spreizbereich 10 und rückwärtigem Ende des Schafts 1 weist der Schaft 1 der Ausführungsform der Figur 8 ebenfalls einen Halsbereich 11 auf, der allenfalls eingeschränkt zum Aufweiten durch das Spreizelement vorgesehen ist. Im Spreizbereich 10 des Schafts 1 der Ausführungsform der Figur 8 ist eine Vielzahl von Einstichen 33, 34 vorgesehen, welche zum einen in ihrer Gesamtheit den Spreizkanal 5 im Spreizbereich 10 bilden, und welche zum anderen zwei Spreizzungen im Spreizbereich 10 abgrenzen.

Der Spreizbereich 10 der Ausführungsform der Figur 8 ist im wesentliche wie der Spreizbereich der Ausführungsform der Figuren 1 bis 7 konstruiert, so dass zur Vermeidung von Wiederholungen auf die diesbezüglichen Ausführungen verwiesen wird. Im Unterschied zur Ausführungsform der Figuren 1 bis 7 sind bei der Ausführungsform der Figur 8 die Einstiche 33, 34 jedoch so geformt, dass zwischen ihnen als Schwalbenschwanzformen ausgebildete Rastelemente 53, 54 gebildet sind. Diese Rastelemente 53, 54 bilden einen Rastmechanismus, der den Spreizbereich temporär in einem komprimierten Zustand halten kann, in welchem ein Partikeldurchgang durch die Einstiche 33, 34 hindurch zumindest erschwert ist.

## Patentansprüche

1. Spreizdübel mit
einem Schaft (1), der einen Halsbereich (11) und einen Spreizbereich (10) aufweist, wobei der Spreizbereich (10) axial versetzt zum Halsbereich (11) angeordnet ist, und einem Spreizkanal (5), der den Halsbereich (11) und den Spreizbereich (10) des Schafts (1) durchläuft,
wobei der Schaft (1) im Spreizbereich (10) durch Einführen eines Spreizelements in den Spreizkanal (5) zum Verankern des Spreizübels in einem Bohrloch radial aufweitbar ist,
wobei der Spreizkanal (5) im Spreizbereich (10) durch Einstiche (21, 31, 22, 32; 33, 34) gebildet ist, die vom Schaftumfang ausgehen und in das Schaftinnere führen, und wobei der Spreizdübel zumindest ein Verschlussmittel zum zumindest bereichsweisen Verschliessen zumindest eines Teils der Einstiche (21, 31, 22, 32; 33, 34) aufweist,
**dadurch gekennzeichnet,**
**dass** als Verschlussmittel Rastelemente (53, 54) vorgesehen sind, welche den Spreizbereich (10) in einem komprimierten Zustand halten können.

2. Spreizdübel nach Anspruch 1,
**dadurch gekennzeichnet,**
**dass** die Rastelemente (53, 54) einstückig mit dem Schaft (1) im Spreizbereich (10) gebildet sind.

3. Spreizdübel nach einem der vorstehenden Ansprüche,
**dadurch gekennzeichnet,**
**dass** die Rastelemente (53, 54) Schwalbenschwanzformen sind, welche an einen der Einstiche (33, 34) oder an mehrere der Einstiche (33, 34) angrenzen.

4. Spreizdübel nach einem der vorstehenden Ansprüche,
**dadurch gekennzeichnet,**
**dass** er einen am Schaft (1) angeordneten Halteteller (2) zum Sichern einer Dämmstoffplatte am Schaft (1) aufweist.

## Claims

1. Expansion plug with
a shaft (1), which has a neck area (11) and an expansion area (10),
in which the expansion area (10) is arranged axially offset to the neck area (11), and an expansion channel (5), which runs through the neck area (11) and the expansion area (10) of the shaft (1),
in which the shaft (1) may be extended radially in the expansion area (10) by inserting an expansion element into the expansion channel (5) to anchor the expansion plug in a hole, in which the expansion channel (5) is formed by recesses (21,31,22, 32; 33, 34) in the expansion area (10), which go out from the circumference of the shaft and into the inside of the shaft, and
in which the expansion plug has at least one means of closure to close at least a part of the recesses (21,31, 22, 32; 33, 34) at least in certain areas,
**characterised in that**
latching elements (53, 54) are provided as means of closure, which can hold the expansion area (10) in a compressed state.

2. Expansion plug according to claim 1,
**characterised in that**
the latching elements (53, 54) are made in one piece with the shaft (1) in the expansion area (10).

3. Expansion plug according to one of the previous claims,
**characterised in that**
the latching elements (53, 54) are dovetails, which abut one of the recesses (33, 34) or several of the recesses (33, 34).

4. Expansion plug according to one of the previous claims,
**characterised in that**
it has a holding plate (2) arranged on the shaft (1) to secure an insulating board on the shaft (1).

## Revendications

1. Cheville à expansion comportant :
une tige (1) comportant une zone de collerette (11) et une zone d'expansion (10), la zone d'expansion (10) étant agencée de manière axialement décalée par rapport à la zone de collerette (11), et
un canal d'expansion (5) traversant la zone de collerette (11) et la zone d'expansion (10) de la tige (1),
dans laquelle la tige (1) peut être élargie radialement dans la zone d'expansion (10) en introduisant un élément d'expansion dans le canal d'expansion (5) de manière à ancrer la cheville d'expansion dans un trou percé,
dans laquelle le canal d'expansion (5) est formé dans la zone d'expansion (10) par des encoches (21, 31, 22, 32 ; 33, 34) qui partent de la circonférence de la tige et mènent à l'intérieur de la tige, et
dans laquelle la cheville d'expansion comporte au moins des moyens d'obturation pour obturer, au moins dans certaines zones, au moins une partie des encoches (21, 31, 22, 32 ; 33, 34),
**caractérisée en ce que**
des éléments d'encliquetage (53, 54) sont prévus en tant que moyens d'obturation, lesquels éléments d'encliquetage peuvent maintenir la zone d'expansion (10) dans un état comprimé.

2. Cheville à expansion selon la revendication 1,
**caractérisée en ce que**
les éléments d'encliquetage (53, 54) sont formés solidaires de la tige (1) dans la zone d'expansion (10) .

3. Cheville à expansion selon l'une des revendications précédentes,
**caractérisée en ce que**
les éléments d'encliquetage (53, 54) sont des formes en queue d'aronde qui sont adjacentes à l'une des encoches (33, 34) ou à plusieurs des encoches (33, 34).

4. Cheville à expansion selon l'une des revendications précédentes,
**caractérisée** ce que
elle comporte un disque d'arrêt (2) agencé sur la tige (1) pour bloquer un panneau de matériau isolant sur la tige (1).
